# NOUVEAU FASCICULE DE BREVET EUROPEEN

(11) **EP 1 820 722 B2**
(45) Date de publication et mention de la décision concernant l'opposition: **07.08.2013**
(45) Mention de la délivrance du brevet: 26.11.2008
(21) Numéro de dépôt: 07290208.3
(22) Date de dépôt: 19.02.2007
(51) Int. Cl.: B62H 5/00

(54) **Systeme automatique de stockage de cycles**
Automatische System zur Speicherung von Fahrrädern
Automatic bicycle storage system

(30) Priorité: 21.02.2006 FR 0601514
(43) Date de publication de la demande: 22.08.2007
(73) Titulaire: JCDecaux SA, 92200 Neuilly-Sur-Seine (FR)
(72) Inventeur: Gagosz, Jean-Claude, 28140 Bu (FR); Zeferino, Emmanuel, 78180 Montigny le Bretonneux (FR)
(74) Mandataire: Cabinet Plasseraud

(56) Documents cités:
- EP-A- 1 603 081
- WO-A-01/54080
- WO-A1-01//51342
- FR-A1- 2 824 942
- FR-A1- 2 856 825

## Description

La présente invention est relative aux systèmes automatiques de stockage de cycles.

Plus particulièrement, l'invention concerne un système automatique de stockage de cycles comprenant :
- une pluralité de cycles (par exemple des bicyclettes) portant chacun un organe de verrouillage,
- une pluralité de postes de verrouillage fixes comportant chacun au moins une gâche adaptée pour recevoir l'organe de verrouillage de l'un des cycles et pour retenir ledit organe de verrouillage.

Un tel système de stockage de cycles peut être utilisé par exemple pour mettre des cycles à disposition du public, moyennant identification de l'emprunteur du cycle et éventuellement paiement d'une location auprès d'une borne de contrôle.

Le document WO-A-02/095698 décrit un exemple d'un tel système de stockage de cycles, qui donne entière satisfaction.

Les caractéristiques du préambule de la revendication 1 sont connues de ce document cité.

La présente invention a notamment pour but de perfectionner encore les dispositifs de ce type, notamment pour garantir qu'un cycle emprunté ne puisse pas être verrouillé sur un poste de verrouillage fixe à l'insu de la personne qui l'a emprunté, pendant un arrêt temporaire.

A cet effet, selon l'invention, un système de stockage de cycles du genre en question est caractérisé par les caractéristiques définies dans la revendication 1.

Grâce à ces dispositions, il suffit à l'utilisateur d'immobiliser le cycle au moyen de l'antivol pendant un arrêt temporaire, pour éviter qu'un tiers ne verrouille le cycle sur un poste de verrouillage en son absence.

Dans différents modes de réalisation de l'invention, on peut éventuellement avoir recours en outre à l'une et/ou à l'autre des dispositions suivantes :
- l'antivol comprend un lien souple qui s'étend entre une première extrémité solidaire du cycle et une deuxième extrémité solidaire d'une broche rigide qui est adaptée pour être verrouillée dans un logement de réception solidaire du cycle lorsque l'antivol immobilise le cycle, le logement de réception étant disposé pour que la broche de l'antivol s'étende sensiblement horizontalement en empêchant le verrouillage du cycle sur un poste de verrouillage lorsque ladite broche de l'antivol est emboîtée dans ledit logement de réception ;
- le logement de réception est voisin de l'organe de verrouillage et est disposé pour que la broche de l'antivol s'étende sensiblement horizontalement du côté de l'organe de verrouillage lorsque ladite broche de l'antivol est emboîtée dans ledit logement de réception ;
- le logement de réception est disposé vers l'avant par rapport à l'organe de verrouillage dans la direction d'insertion dudit organe de verrouillage dans la gâche ;
- le logement de réception est ménagé dans un boîtier qui porte l'organe de verrouillage et qui est solidaire du cycle ;
- le cycle comporte en outre une serrure à clef qui permet d'extraire la clef de la serrure uniquement dans une position angulaire prédéterminée de la clef, la serrure comportant en outre un verrou mobile avec la clef et adapté pour coopérer avec la broche de l'antivol pour verrouiller ladite broche de l'antivol lorsque la broche de l'antivol est emboîtée dans le logement de réception, le verrou étant en outre adapté pour coopérer avec la broche de l'antivol pour que ladite clef soit dans ladite position angulaire prédéterminée uniquement lorsque la broche de l'antivol est verrouillée dans le logement de réception ;
- le verrou est adapté pour pénétrer dans ledit logement de réception lorsque ladite clef est dans la position prédéterminée, ledit verrou étant sollicité élastiquement vers une position de verrouillage correspondant à ladite position angulaire prédéterminée de la clef, le logement de réception comportant en outre un organe de blocage coulissant qui est sollicité vers une position de repos où ledit organe de blocage empêche le verrou d'atteindre ladite position de verrouillage, ledit organe de blocage étant adapté pour être repoussé par la broche de l'antivol en permettant à ladite broche de l'antivol de coopérer avec le verrou ;
- la broche de l'antivol comporte un évidement latéral adapté pour recevoir le verrou ;
- la serrure est entourée au moins partiellement par une paroi cache-clef qui fait saillie vers la gâche et qui est adaptée pour masquer la clef lorsque le cycle est verrouillé sur le poste de verrouillage ;
- la gâche est adaptée pour empêcher de placer l'antivol en position d'immobilisation du cycle lorsque ledit cycle est verrouillé sur le poste de verrouillage.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique en perspective montrant un système automatique de stockage de cycles selon une forme de réalisation de l'invention,
- la figure 2 est une vue de détail montrant le verrouillage d'un cycle sur l'un des postes de verrouillage de la figure 1,
- la figure 3 est une vue de détail montrant le dispositif de verrouillage porté par le cycle de la figure 2,
- la figure 4 est une vue de côté de la borne de verrouillage sur laquelle est verrouillé le cycle de la figure 2,
- la figure 5 est une vue éclatée simplifiée de la gâche de la borne de verrouillage de la figure 4,
- la figure 6 est un schéma de principe illustrant le fonctionnement de la gâche de la figure 5, présenté sous la forme d'une coupe prise selon la ligne VI-VI de la figure 5,
- la figure 7 est une vue de côté du dispositif de verrouillage de la figure 3,
- la figure 8 est une vue en coupe selon la ligne VIII-VIII de la figure 7,
- la figure 9 est une vue éclatée du dispositif de verrouillage des figures 7 et 8, vue selon la direction IX de la figure 8,
- la figure 10 est une vue schématique d'ensemble montrant le cycle de la figure 2 en position d'arrêt temporaire, avec son antivol mis,
- la figure 11 est une vue de détail de la figure 10 montrant le dispositif de verrouillage du cycle avec l'antivol mis, la clef de l'antivol n'étant pas encore enlevée par l'utilisateur,
- la figure 12 est une vue en coupe similaire à la figure 8 montrant le dispositif de verrouillage avec son antivol mis,
- et la figure 13 est une vue éclatée similaire à la figure 9, montrant le dispositif de verrouillage avec son antivol mis.

Sur les différentes figures, les mêmes références désignent des éléments identiques ou similaires

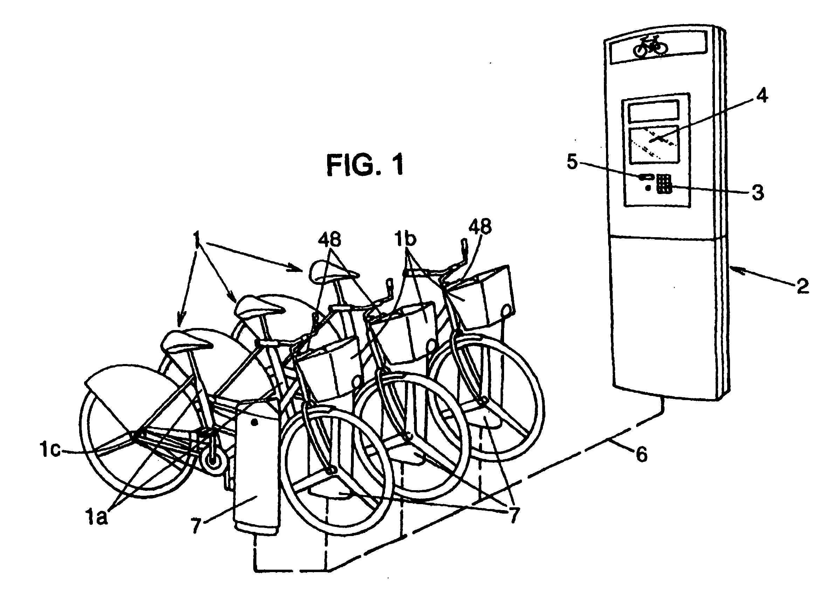

Comme représenté sur la figure 1, la présente invention concerne un système automatique de stockage de cycles 1 tels que notamment des bicyclettes, permettant par exemple de stocker des cycles sur la voie publique de façon à les mettre à disposition du public.

Ce système automatique de stockage de cycles peut comporter plusieurs aires de stockage de cycles, dont une est représentée sur la figure 1. Chaque aire de stockage de cycles comprend une borne interactive 2 dotée d'une interface utilisateur comprenant par exemple un clavier 3, un écran 4 et un lecteur de cartes portatives électronique 5.

La borne interactive 2 est reliée, par exemple par une liaison filaire enterrée 6, à une pluralité de postes de verrouillage 7 qui peuvent par exemple se présenter sous la forme de bornes de verrouillage fixées au sol sur la voie publique.

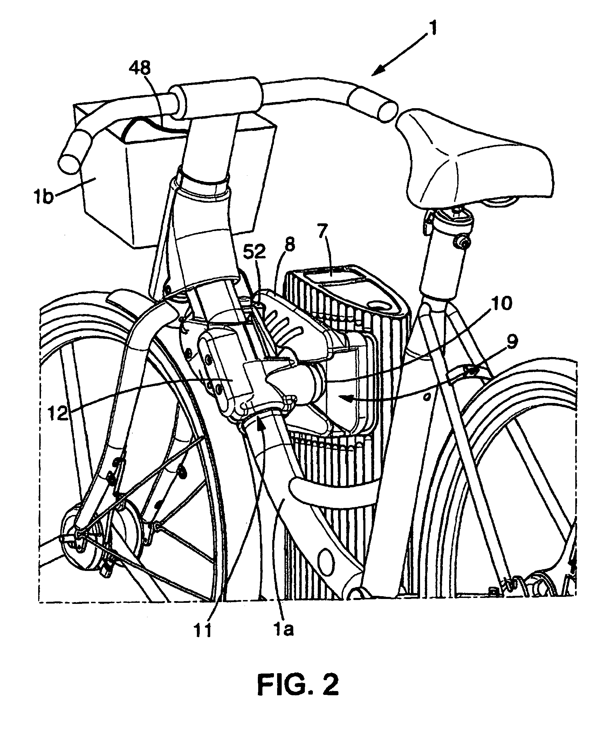

Comme on peut le voir sur la figure 2, chaque poste de verrouillage 7 comporte une gâche 8 formant un boîtier doté d'une ouverture échancrée 9 ouverte horizontalement et adaptée pour recevoir et retenir un organe de verrouillage 10 appartenant à un dispositif de verrouillage 11 solidaire par exemple du cadre la d'un des cycles 1.

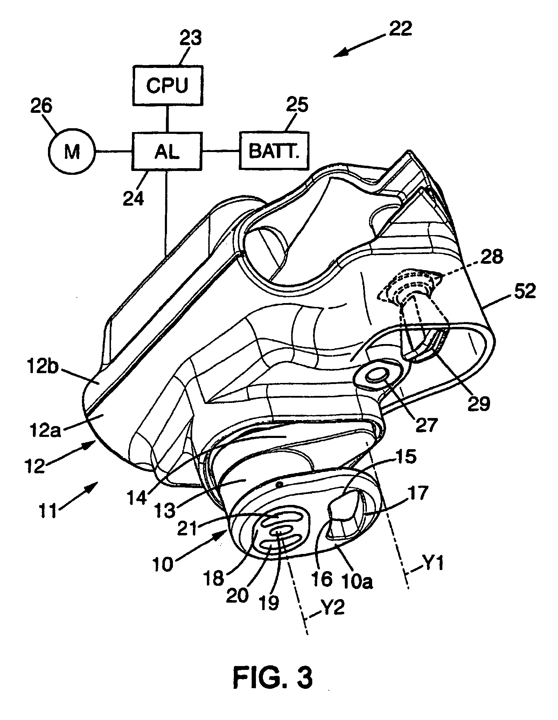

Comme on peut le voir sur la figure 3, le dispositif de verrouillage 11 peut comporter un support 12, qui peut par exemple être réalisé en deux parties 12a, 12b, solidarisées ensemble en venant enserrer l'un des tubes du cadre la du cycle. L'organe de verrouillage 10 est monté mobile sur le support 12 de façon à permettre un certain débattement de l'organe de verrouillage 12 au moins verticalement par rapport audit cycle.

Plus particulièrement, l'organe de verrouillage 10 peut être monté pivotant par rapport au support 12, autour d'un axe de rotation horizontal Y1. Dans l'exemple représenté sur les dessins, l'organe de verrouillage 10 comprend une plaque métallique verticale 10a qui est solidarisée à un moyeu 13 cylindrique de révolution présentant un axe central Y2 parallèle à l'axe Y1 et décalé par rapport à Y1, le moyeu 13 étant lui-même solidaire d'un bras de levier 14 qui est monté pivotant sur le support 12 autour de l'axe de rotation Y1.

L'organe de verrouillage 10 s'étend vers l'avant, c' est-à-dire vers l'axe de rotation Y1, à partir du moyeu 13. A son extrémité avant, ledit organe de verrouillage 10 comporte un évidement traversant 15 qui est ouvert parallèlement aux axes Y1, Y2, et qui présente des bords en arc de cercle radialement intérieur 16 et radialement extérieur 17, sensiblement centrés sur l'axe central Y2. De plus, en correspondance avec le moyeu 13, la plaque 10a de l'organe de verrouillage 10 comporte une zone électriquement isolante 18, orientée à l'opposé du boîtier 12, dans laquelle sont réalisées trois zones de contact électriquement conductrices :
- une zone de contact centrale 19, plane et disposée en correspondance avec l'axe central Y2, cette zone de contact centrale 19 étant de préférence allongée sensiblement horizontalement,
- et deux zones de contact de forme générale incurvée 20, 21, allongées sensiblement horizontalement, qui sont disposées de part et d'autre de la zone de contact central, ces zones de contact de forme générale incurvée étant planes et présentant chacune une concavité tournée vers l'axe central Y2.

On notera que l'organe de verrouillage 10 pourrait comporter un nombre de zone de contact 19-21 différent de trois (par exemple deux zones de contact), ces zones de contact comportant de préférence au moins une zone de contact de forme générale incurvée de concavité tournée vers l'axe central Y2.

Les zones de contact 19-21 permettent, lorsque le cycle 1 est verrouillé sur une borne de verrouillage 7, de relier électriquement ladite borne de verrouillage à un circuit électrique 22 appartenant au cycle 1. Ce circuit électrique 22 peut comprendre par exemple au moins une unité centrale électronique 23 (CPU) adaptée pour communiquer avec la borne de verrouillage 7. Dans l'exemple considéré ici, le circuit électrique 22 comporte en outre un circuit de puissance 24 (AL) qui est relié à l'unité centrale électronique 23 ainsi qu'à une batterie 25 (BATT.) et à un moteur électrique d'assistance 26 (M) qui peut être logé par exemple dans le moyeu 1c (voir figure 1) du cycle pour aider à la propulsion du cycle en cours d'utilisation. Dans ce cas, les zones de contact 19-21 servent non seulement à faire communiquer la bande de verrouillage 7 avec l'unité centrale électronique 22, mais également à recharger la batterie 25 qui permet ensuite d'alimenter le moteur électrique 26 en cours d'utilisation.

Par ailleurs, comme il sera expliqué plus en détail ci-après, le support 12 du dispositif de verrouillage comporte en outre un logement de réception 27 pour un antivol et une serrure 28 dotée d'une clef 29 pour verrouiller l'antivol.

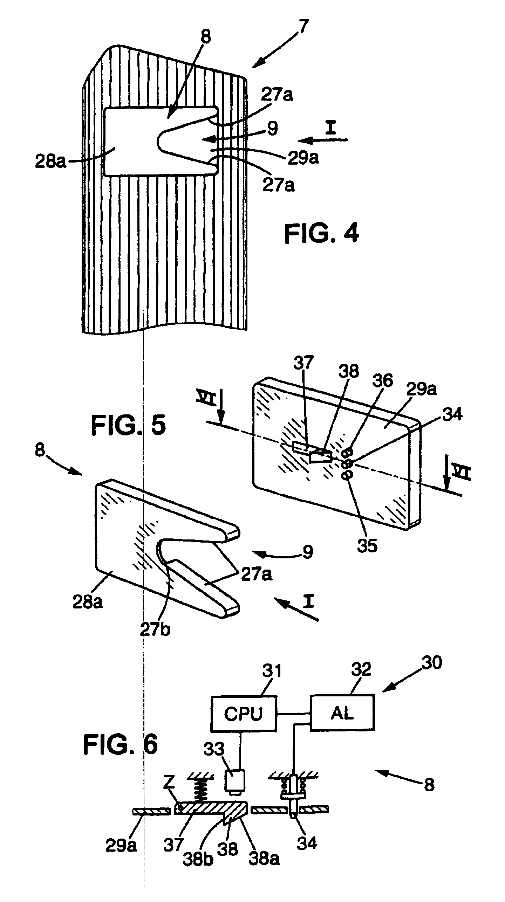

Comme représenté sur les figures 4 et 5, l'ouverture échancrée 9 de la gâche 8 comporte avantageusement deux guides 27a en forme de rampes convergeant l'une vers l'autre dans la direction d'insertion I de l'organe de verrouillage dans la gâche. Ces guides 27a sont à adapter pour coopérer avec la plaque 10a de l'organe de verrouillage pour déplacer l'organe de verrouillage 10 autour de l'axe de rotation Y1 jusqu'à une position nominale de verrouillage relativement à la gâche 8. On assure ainsi que l'organe de verrouillage 10 et plus particulièrement l'évidemment 15 de cet organe de verrouillage, se trouve à bonne hauteur par rapport à la gâche 10 après insertion dans ladite gâche, dans la direction d'insertion I.

Comme on peut le voir sur la figure 5, la gâche 8 comporte un couvercle 28a, incluant par exemple l'ouverture échancrée 9 et les guides 27a, et une embase 29a.

Comme on peut le voir sur les figures 5 et 6, l'embase 29a peut comporter un circuit électrique 30 comprenant par exemple une unité centrale électronique 31 (CPU), un circuit de puissance 32 (AL), un électro-aimant (33) et trois contacts électrique 34, 35, 36 qui peuvent par exemple se présenter sous forme de broches faisant saillie hors de l'embase 29 et adaptées pour venir en contact respectivement avec les zones de contact électrique 19, 20, 21 de l'organe de verrouillage lorsque le cycle est verrouillé sur la borne de verrouillage 7. Les contacts électriques 34, 35, 36 peuvent par exemple être sensiblement alignés verticalement.

Par ailleurs, l'embase 29 comporte également un organe d'accrochage 37 tel que par exemple un crochet monté pivotant autour d'un axe vertical Z et doté d'un bec 38 faisant saillie par rapport à l'embase 29a. Le crochet 37 est sollicité élastiquement vers une positon de repos dans laquelle le bec 38 fait saillie par rapport à l'embase 29, de façon que lorsque l'organe de verrouillage 10 est engagé dans la gâche 8 dans la direction d'insertion I, le bec 38 soit repoussé jusque dans une position escamotée par coopération entre une surface inclinée 38a du bec 38 et le bord avant de la plaque 10a, puis ledit bec 38 s'engage dans l'évidemment 15 de la plaque 10a en retenant alors ladite plaque par coopération entre un bord d'arrêt 38b appartenant au bec et le bord extérieur 17 de l'évidemment 15.

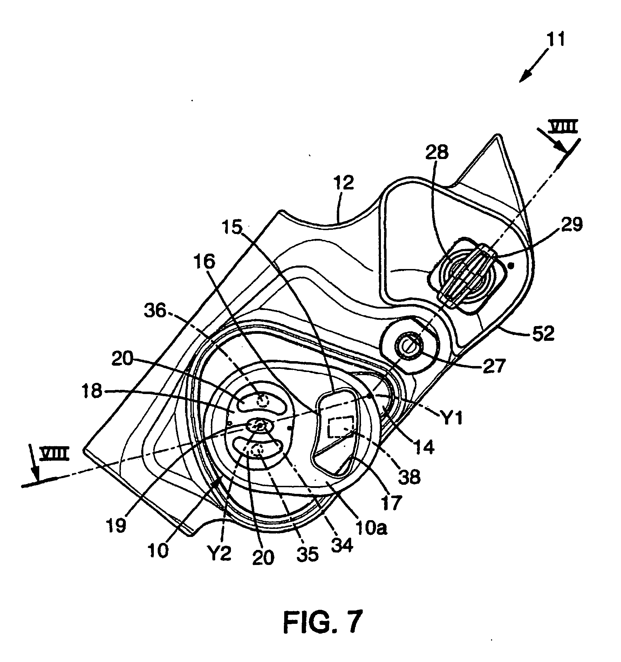

Dans cette position, le moyeu 13 de l'organe de verrouillage est de préférence en contact avec le bord d'extrémité 27b de l'ouverture échancrée 9 du couvercle 28a, de façon que le cycle 1 soit alors verrouillé sur la borne de verrouillage 7 avec un faible jeu. Les positions relatives du bec 38 et des contacts 34-36 relativement à l'organe de verrouillage 10 sont représentées en traits mixtes sur la figure 7, dans la position de verrouillage du cycle 1 sur la borne de verrouillage 7.

L'organe d'accrochage 37 peut en outre être déplacé jusqu'à une position escamotée par l'électro-aimant 33, pour permettre d'enlever le cycle 1 de la borne de verrouillage 7.

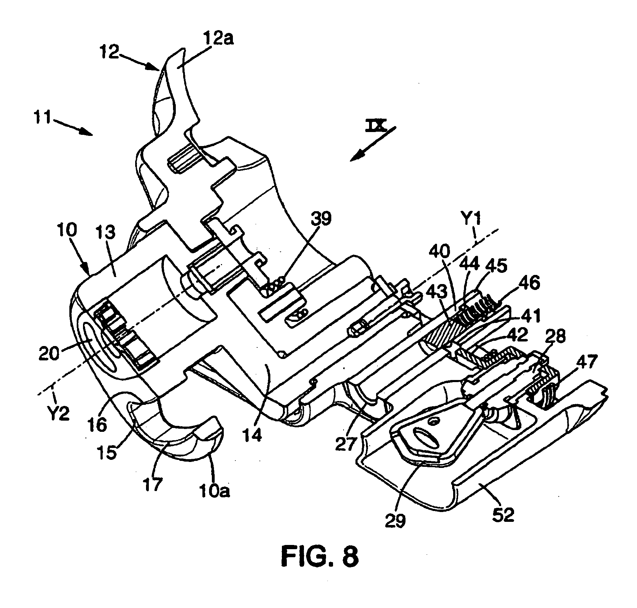

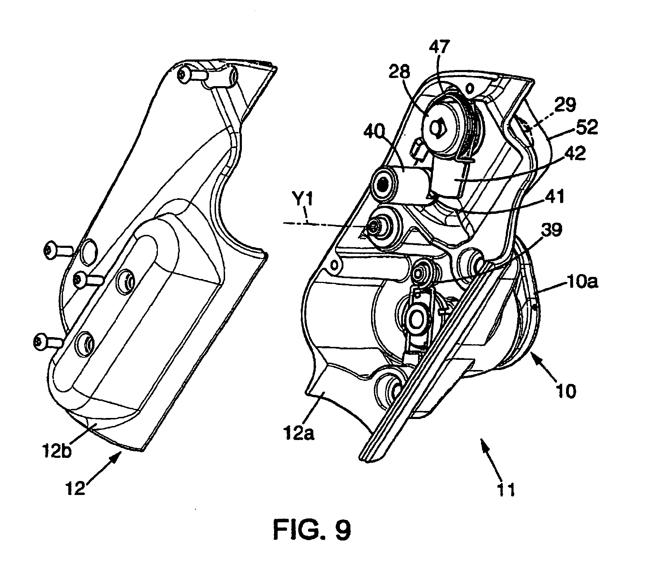

Comme représenté sur les figures 8 et 9, l'organe de verrouillage 10 est sollicité élastiquement vers une position de repos par un ressort 39. Par ailleurs, le logement de réception d'antivol 27 susmentionné est délimité par une douille creuse 40 qui s'étend horizontalement et qui présente une fente latérale verticale 41 dans laquelle peut pénétrer un verrou pouvant se présenter par exemple sous la forme d'une plaquette verticale 42 tournant avec la clef 29 et la partie mobile de la serrure 28, ladite plaquette 42 étant sollicitée élastiquement vers la fente 41 par un ressort 47.

Un organe de blocage tel qu'une broche cylindrique 43 est monté coulissant dans le logement 27. Cette broche 43 est dotée d'une tête élargie 44 disposée vers l'intérieur du support 12, laquelle tête 44 coulisse dans une portion élargie 45 du logement 27. Un ressort 46, qui prend appui sur une partie du support 12, repousse la tête 44 en sollicitant ainsi élastiquement la broche 43 vers une position de repos où la tête 44 est en appui contre l'épaulement qui délimite la portion élargie 45 du logement.

Dans cette position de repos, la broche 43 recouvre la fente 41 et empêche la plaquette 42 de pénétrer complètement dans ladite fente 41 et dans le logement de réception 27, de sorte que la clef 29 reste dans une position angulaire où elle ne peut pas sortir de la serrure 28.

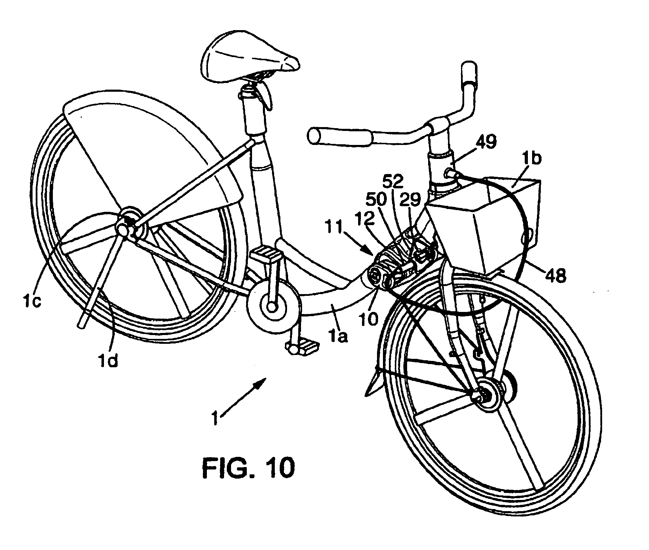

Comme représenté sur la figure 10, chaque cycle 1 comporte en outre un antivol 48 qui peut se présenter par exemple sous la forme d'un câble métallique ou autre dont une extrémité est fixée rigidement au cadre la du cycle, par exemple au niveau de l'attache 49 d'un panier 1b situé à l'avant du cycle. A son extrémité opposée, l'antivol 48 se termine par une broche métallique rigide 50 qui est adaptée pour être reçue dans le logement de la réception 27 susmentionné. L'antivol 48 permet à un utilisateur d'immobiliser temporairement le cycle 1, lequel cycle peut alors reposer par exemple sur une béquille 1d montée sur le cadre 1a.

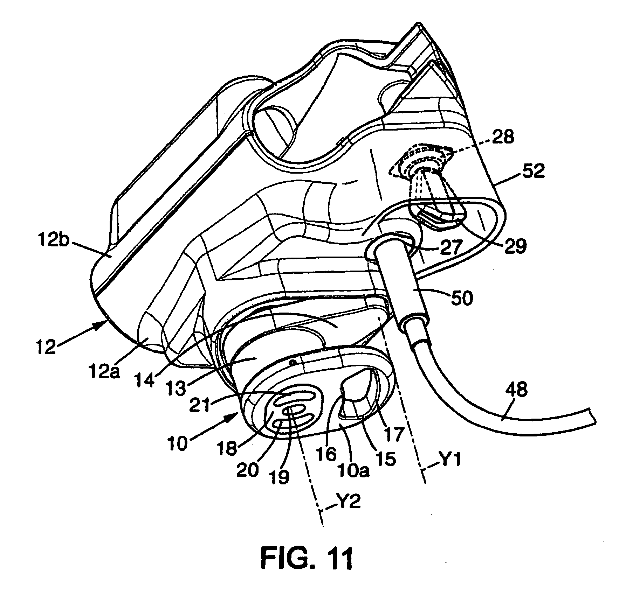

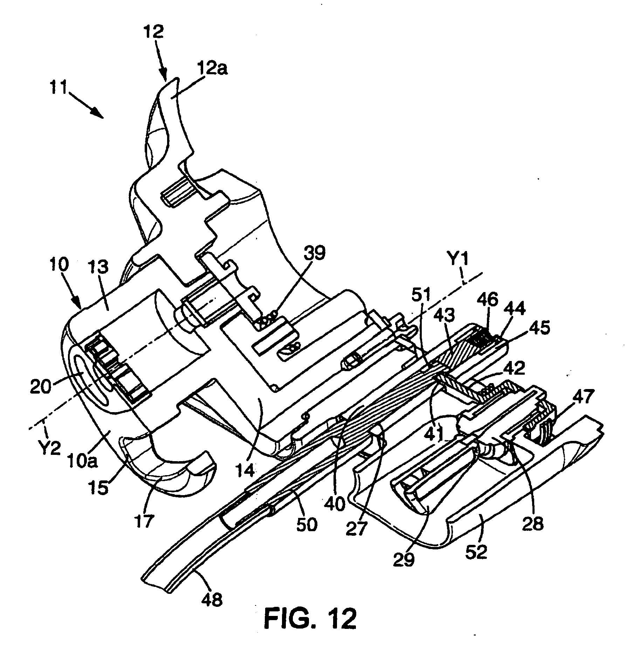

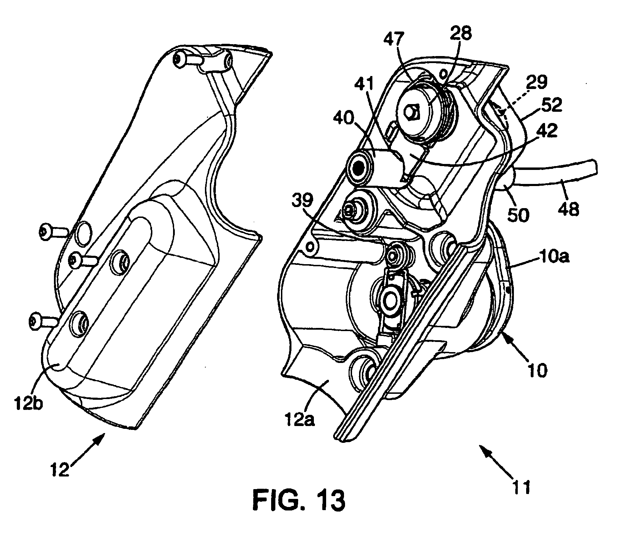

Comme on peut le voir plus en détail sur les figures 11 et 12, lorsque la broche 50 est reçue dans le logement de réception 27, elle empêche le cycle 1 d'être remis en place sur une borne de verrouillage 7, puisque ladite broche empêche alors l'organe de verrouillage 10 de pénétrer dans la gâche 8 de la borne de verrouillage. Comme représenté sur les figures 12 et 13, lorsque la broche 50 de l'antivol 48 est insérée dans le logement de réception 27, elle repousse la broche 43 vers l'intérieur du support 12 en comprimant le ressort 46, jusque dans une position de butée où un évidement latéral tel qu'une gorge annulaire 51 ménagée dans la broche 50, vient en correspondance avec la fente 41 de la douille 40 qui délimite le logement de réception 27. Dans cette position, la plaquette 42 peut pénétrer complètement dans la fente 41 et la gorge 51 sous l'action du ressort 47, en tournant jusqu'à une position angulaire à laquelle il est possible d'enlever la clef 29 de la serrure 28.

Le dispositif qui vient d'être décrit fonctionne comme suit.

Lorsqu'un utilisateur veut emprunter un cycle 1 sur l'une des bornes de verrouillage 7, il peut par exemple insérer une carte électronique portative dans le lecteur 5 de la borne interactive 2 puis rentrer un code secret au moyen du clavier 3, de façon à s'identifier auprès de ladite borne interactive. La borne interactive 2 commande alors la gâche 8 d'une des bornes de verrouillage 7, de façon à déverrouiller le cycle 1 en place sur cette borne. L'utilisateur peut alors prendre le cycle 1, et l'unité centrale électronique 31 du cycle repère alors l'enlèvement du cycle 1 puisqu'elle ne peut plus communiquer avec l'unité centrale électronique 23 de ce cycle. L'unité centrale électronique 31 de la borne de verrouillage 7 informe alors la borne interactive 2 de cet enlèvement.

Tant que le cycle 1 est en position de stockage ou en cours d'utilisation normale, son antivol 48 est simplement stocké dans le panier 1b (voir figures 1 et 2), et la clef 29 ne peut pas être enlevée de la serrure 28, comme expliqué précédemment.

De plus, tant que le cycle 1 est verrouillé sur la borne 7, ladite borne 7 et la gâche 8 empêchent d'insérer la broche 50 de l'antivol dans son logement de réception 27. Dans cette position la clef 29 est en outre de préférence marquée par une paroi cache-clef 52 (voir par exemple la figure 3) qui entoure au moins partiellement la clef et qui débouche en regard de la gâche 8 (voir figure 2).

Pendant l'utilisation du cycle, lorsque l'utilisateur souhaite le verrouiller temporairement, il passe l'antivol 48 dans la roue avant du cycle et engage la broche 50 de l'antivol dans le logement de réception 27 du support 12, de sorte que la plaquette 42 de la serrure 28 verrouille la broche 50 sur le support 12, et de sorte que la clef 29 de l'antivol tourne jusqu'à une position où elle peut être enlevée du support 12 comme expliqué ci-dessus. L'utilisateur enlève donc la clef 29 de la serrure 28, de sorte que le cycle est temporairement immobilisé. Lorsque l'utilisateur veut reprendre le cycle, il lui suffit d'insérer la clef 29 dans la serrure 28 et de tourner ladite clef de façon à libérer la broche 50 de l'antivol, après quoi l'antivol 48 est à nouveau stocké dans le panier 1b du cycle.

Lorsque l'utilisateur rend le cycle 1 et le met en place sur une borne de verrouillage 7, il engage l'organe de verrouillage 10 dans la gâche 8 de la borne de verrouillage. Au cours de ce mouvement, l'organe de verrouillage 10 pivote autour de l'axe de pivotement Y1, en étant guidé par les guides 217a de la gâche 8, de façon que l'évidement 15 dudit organe de verrouillage se trouve parfaitement en correspondance avec le bec 38 de l'organe d'accrochage et de façon que les zones de contact 19-21 du cycle se trouvent parfaitement en correspondance avec les contacts 34-36 de la gâche. L'unité centrale électronique 31 de la borne de verrouillage peut alors communiquer avec l'unité centrale électronique 23 du cycle par l'intermédiaire d'au moins certains des contacts 19-21 et 34-36, de façon à identifier le cycle et à informer la borne interactive 2 du fait que le cycle a été rendu. De plus, dans l'exemple considéré ici, le circuit électrique 30 de la borne de verrouillage 7 peut alors recharger la batterie 25 du cycle 1 par l'intermédiaire d'au moins certains des contacts 19-21 et 34-36.

Eventuellement, les contacts 19-21 et 34-36 pourraient être remplacés par des interfaces de communication sans contact, notamment si le cycle 1 ne comportait pas de moteur 26.

On notera que lorsque le cycle est emprunté et rendu, la borne interactive 2 peut communiquer avec un poste central de gestion des cycles (non représenté), le cas échéant relié à plusieurs aires de stockage de cycles et donc à plusieurs bornes interactives 2.

On notera par ailleurs, que selon une variante de l'invention, la serrure 28 et la clef 29 pourrait être remplacées par un système de verrouillage électronique, par exemple un système à code.

## Revendications

1. Système automatique de stockage de cycles comprenant :
- une pluralité de cycles (1) portant chacun un organe de verrouillage (10),
- une pluralité de postes de verrouillage (7) fixes comportant chacun au moins une gâche (8) adaptée pour recevoir l'organe de verrouillage (10) de l'un des cycles et pour retenir ledit organe de verrouillage,
**caractérisé en ce que** chaque cycle comporte un antivol (48) qui, lorsqu'il est en position d'immobilisation du cycle, empêche le verrouillage du cycle (1) sur un poste de verrouillage (7) dans lequel l'antivol (48) comprend un lien souple qui s'étend entre une première extrémité solidaire du cycle (1) et une deuxième extrémité solidaire d'une broche rigide (50) qui est adaptée pour être verrouillée dans un logement de réception (27) solidaire du cycle lorsque l'antivol (48) immobilise le cycle, le logement de réception (27) étant disposé pour que la broche de l'antivol (50) s'étende sensiblement horizontalement en empêchant le verrouillage du cycle (1) sur un poste de verrouillage (7) lorsque ladite broche de l'antivol (50) est emboîtée dans ledit logement de réception (27).

2. Système automatique de stockage de cycles selon la revendication 1, dans lequel le logement de réception (27) est voisin de l'organe de verrouillage (10) et est disposé pour que la broche de l'antivol (50) s'étende sensiblement horizontalement du côté de l'organe de verrouillage (10) lorsque ladite broche de l'antivol (50) est emboîtée dans ledit logement de réception (27).

3. Système automatique de stockage de cycles selon la revendication 1 ou la revendication 2, dans lequel le logement de réception (27) est disposé vers l'avant par rapport à l'organe de verrouillage (10) dans la direction d'insertion (I) dudit organe de verrouillage (10) dans la gâche (8).

4. Système automatique de stockage de cycles selon l'une quelconque des revendications 1 à 3, dans lequel le logement de réception (27) est ménagé dans un boîtier (12) qui porte l'organe de verrouillage (10) et qui est solidaire du cycle (1).

5. Système automatique de stockage de cycles selon l'une quelconque des revendications 3 à 4, dans lequel le cycle (1) comporte en outre une serrure (28) à clef (29) qui permet d'extraire la clef (29) de la serrure (28) uniquement dans une position angulaire prédéterminée de la clef (29), la serrure (28) comportant en outre un verrou (42) mobile avec la clef (29) et adapté pour coopérer avec la broche de l'antivol (50) pour verrouiller ladite broche de l'antivol lorsque la broche de l'antivol est emboîtée dans le logement de réception (27), le verrou (42) étant en outre adapté pour coopérer avec la broche de l'antivol (50) pour que ladite clef (29) soit dans ladite position angulaire prédéterminée uniquement lorsque la broche de l'antivol (50) est verrouillée dans le logement de réception (27).

6. Système automatique de stockage de cycles selon la revendication 5, dans lequel le verrou (42) est adapté pour pénétrer dans ledit logement de réception (27) lorsque ladite clef (29) est dans la position prédéterminée, ledit verrou (42) étant sollicité élastiquement vers une position de verrouillage correspondant à ladite position angulaire prédéterminée de la clef (29), le logement de réception (27) comportant en outre un organe de blocage (43) coulissant qui est sollicité vers une position de repos où ledit organe de blocage (43) empêche le verrou (42) d'atteindre ladite position de verrouillage, ledit organe de blocage (43) étant adapté pour être repoussé par la broche de l'antivol (50) en permettant à ladite broche de l'antivol de coopérer avec le verrou (42).

7. Système automatique de stockage de cycles selon l'une quelconque des revendications 5 et 6, dans lequel la broche de l'antivol (50) comporte un évidement latéral (51) adapté pour recevoir le verrou (42).

8. Système automatique de stockage de cycles selon l'une quelconque des revendications 5 à 7, dans lequel la serrure (28) est entourée au moins partiellement par une paroi cache-clef (52) qui fait saillie vers la gâche (8) et qui est adaptée pour masquer la clef (29) lorsque le cycle est verrouillé sur le poste de verrouillage.

9. Système automatique de stockage de cycles selon l'une quelconque des revendications précédentes, dans lequel la gâche (8) est adaptée pour empêcher de placer l'antivol (48) en position d'immobilisation du cycle (1) lorsque ledit cycle est verrouillé sur le poste de verrouillage.

## Patentansprüche

1. Automatisches System zur Verwahrung von Rädern mit
• mehreren Rädern (1), die jeweils ein Verriegelungsglied (10) tragen,
• mehreren feststehenden Verriegelungsposten (7), die jeweils mindestens einen Schließhaken (8) umfassen, der geeignet ist, das Verriegelungsglied (10) eines der Räder aufzunehmen und das Verriegelungsglied festzuhalten,
**dadurch gekennzeichnet, dass** jedes Rad eine Diebstahlsicherung (48) umfasst, mit der das Verriegeln des Rads (1) an einem Verriegelungsposten (7) verhindert wird, wenn sie sich in der Radimmobilisierungsposition befindet, in dem die Diebstahlsicherung (48) eine flexible Verbindung umfasst, die sich zwischen einem mit dem Rad (1) fest verbundenen ersten Ende und einem zweiten Ende erstreckt, das fest mit einem starren Stift (50) verbunden ist, der geeignet ist, in einem fest mit dem Rad verbundenen Aufnahmelager (27) verriegelt zu werden, wenn das Rad durch die Diebstahlsicherung (48) immobilisiert wird, wobei das Aufnahmelager (27) so angeordnet ist, dass sich der Stift (50) der Diebstahlsicherung im Wesentlichen horizontal erstreckt, wobei die Verriegelung des Rads (1) an einem Verriegelungsposten (7) verhindert wird, wenn der Stift (50) der Diebstahlsicherung im Aufnahmelager (27) eingesteckt ist.

2. Automatisches System zur Verwahrung von Rädern nach Anspruch 1, wobei das Aufnahmelager (27) dem Verriegelungsglied (10) benachbart und so angeordnet ist, dass sich der Stift (50) der Diebstahlsicherung im Wesentlichen horizontal auf der Seite des Verriegelungsglieds (10) erstreckt, wenn der Stift (50) der Diebstahlsicherung im Aufnahmelager (27) eingesteckt ist.

3. Automatisches System zur Verwahrung von Rädern nach Anspruch 1 oder 2, wobei das Aufnahmelager (27) bezüglich des Verriegelungsglieds (10) in der Richtung (I) des Einführens des Verriegelungsglieds (10) in den Schließhaken (8) nach vorne angeordnet ist.

4. Automatisches System zur Verwahrung von Rädern nach einem der Ansprüche 1 bis 3, wobei das Aufnahmelager (27) in einem Gehäuse (12) vorgesehen ist, das das Verriegelungsglied (10) trägt und fest mit dem Rad (1) verbunden ist.

5. Automatisches System zur Verwahrung von Rädern nach einem der Ansprüche 1 bis 4, wobei das Rad (1) ferner ein Schloss (28) mit Schlüssel (29) umfasst, bei dem man den Schlüssel (29) nur in einer vorbestimmten Winkelposition des Schlüssels (29) aus dem Schloss (28) ziehen kann, wobei das Schloss (28) ferner einen mit dem Schlüssel (29) beweglichen Riegel (42) umfasst, der geeignet ist, mit dem Stift (50) der Diebstahlsicherung zusammenzuwirken, um den Stift der Diebstahlsicherung zu verriegeln, wenn der Stift der Diebstahlsicherung im Aufnahmelager (27) eingesteckt ist, wobei der Riegel (42) ferner geeignet ist, mit dem Stift (50) der Diebstahlsicherung zusammenzuwirken, damit der Schlüssel (29) nur dann in der vorbestimmten Winkelposition ist, wenn der Stift (50) der Diebstahlsicherung im Aufnahmelager (27) verriegelt ist.

6. Automatisches System zur Verwahrung von Rädern nach Anspruch 5, wobei der Riegel (42) geeignet ist, in das Aufnahmelager (27) einzudringen, wenn der Schlüssel (29) in der vorbestimmten Position ist, wobei der Riegel (42) elastisch zu einer Verriegelungsposition beaufschlagt wird, die der vorbestimmten Winkelposition des Schlüssels (29) entspricht, wobei das Aufnahmelager (27) ferner ein gleitendes Blockierungsglied (43) umfasst, das zu einer Ruheposition hin beaufschlagt wird, in der das Blockierungsglied (43) verhindert, dass der Riegel (42) die Verriegelungsposition erreicht, wobei das Blockierungsglied (43) geeignet ist, durch den Stift (50) der Diebstahlsicherung zurückgeschoben zu werden, wobei gestattet wird, dass der Stift der Diebstahlsicherung mit dem Riegel (42) zusammenwirkt.

7. Automatisches System zur Verwahrung von Rädern nach Anspruch 5 oder 6, wobei der Stift (50) der Diebstahlsicherung eine seitliche Ausnehmung (51) umfasst, die geeignet ist, den Riegel (42) aufzunehmen.

8. Automatisches System zur Verwahrung von Rädern nach einem der Ansprüche 5 bis 7, wobei das Schloss (28) mindestens teilweise von einer Schlüsselabdeckungswand (52) umgeben ist, die zum Schließhaken (8) vorragt und geeignet ist, den Schlüssel (29) zu verdecken, wenn das Rad am Verriegelungsposten verriegelt ist.

9. Automatisches System zur Verwahrung von Rädern nach einem der vorhergehenden Ansprüche, wobei der Schließhaken (8) geeignet ist, zu verhindern, dass die Diebstahlsicherung (48) in die Immobilisierungsposition des Rads (1) platziert wird, wenn das Rad am Verriegelungsposten verriegelt ist.

## Claims

1. An automatic cycle storage system comprising:
• a plurality of cycles (1), each of which carries a locking member (10); and
• a plurality of fixed locking stations (7) each of which is provided with at least one keeper (8) adapted to receive the locking member (10) of one of the cycles and
said automatic cycle storage system being **characterized in that** each cycle has an anti-theft cycle lock (48) which, when it is in the position in which it immobilizes the cycle, prevents the cycle (1) from being locked to the locking station (7), in which the anti-theft cycle lock (48) comprises a flexible tie that extends between a first end that is secured to the cycle (1) and a second end that is secured to a rigid pin (50) which is adapted to be locked in a socket (27) secured to the cycle when the anti-theft cycle lock (48) immobilizes the cycle, the socket (27) being disposed so that the pin of the anti-theft cycle lock (50) extends substantially horizontally while preventing the cycle (1) from being locked to the locking station (7) when said pin of the anti-theft cycle lock (50) is engaged in said socket (27).

2. An automatic cycle storage system according to claim 1, in which the socket (27) is in the vicinity of the locking member (10) and is disposed so that the pin of the anti-theft cycle lock (50) extends substantially horizontally on the same side as the locking member (10) when said pin of the anti-theft cycle lock (50) is engaged in said socket (27).

3. An automatic cycle storage system according to claim 1 or claim 2, in which the socket (27) is disposed towards the front relative to the locking member (10) in the insertion direction (I) in which said locking member (10) is inserted into the keeper (8).

4. An automatic cycle storage system according to any one of claims 1 to 3, in which the socket (27) is provided in a box (12) that carries the locking member (10) and that is secured to the cycle (1).

5. An automatic cycle storage system according to any one of claims 1 to 4, in which the cycle (1) also has a lock (28) operated by a key (29) and enabling the key (29) to be extracted from the lock (28) only when the key (29) is in a predetermined angular position, the lock (28) also having a latch (42) that is mounted to move with the key (29) and that is adapted to co-operate with the pin of the anti-theft cycle lock when the pin of the anti-theft cycle lock is engaged in the socket (27), the latch (42) also being adapted to co-operate with the pin of the anti-theft cycle lock (50) so that said key (29) is in said predetermined angular position only when the pin of the anti-theft cycle lock (50) is locked in the socket (27).

6. An automatic cycle storage system according to claim 5, in which the latch (42) is adapted to penetrate into said socket (27) when said key (29) is in the predetermined position, said latch (42) being urged resiliently towards a locking position corresponding to said predetermined angular position of the key (29), the socket (27) also including a slidably mounted blocking member (43) that is urged towards a rest position in which said blocking member (43) prevents the latch (42) from reaching said locking position, said locking member (43) being adapted to be pushed back by the pin of the anti-theft cycle lock (50) while enabling said pin of the anti-theft cycle lock to co-operate with the latch (42).

7. An automatic cycle storage system according to claim 5 or claim 6, in which the pin of the anti-theft cycle lock (50) is provided with a side recess (51) adapted to receive the latch (42).

8. An automatic cycle storage system according to any one of claims 5 to 7, in which the lock (28) is surrounded at least partially by a key-cover wall (52) that projects towards the keeper (8) and that is adapted to mask the key (29) when the cycle is locked to the locking station.

9. An automatic cycle storage system according to any preceding claim, in which the keeper (8) is adapted to prevent the anti-theft cycle lock (48) from being placed in a position in which it immobilizes the cycle (1) when said cycle is locked to the locking station.
